# EUROPÄISCHE PATENTANMELDUNG

(11) **EP 1 748 548 A2**
(43) Veröffentlichungstag der Anmeldung: **31.01.2007**
(21) Anmeldenummer: 06116112.1
(22) Anmeldetag: 27.06.2006
(51) Int. Cl.: H02P 7/29

(54) **Schaltungsanordnung für den Betrieb eines in seiner Drehrichtung umkehrbaren Gleichstrommotors**

(30) Priorität: 26.07.2005 DE 102005034705
(71) Anmelder: ROBERT BOSCH GMBH, 70442 Stuttgart (DE)
(72) Erfinder: Lux, Thomas, 77833, Ottersweier (DE)

(57) **Zusammenfassung**

Die Erfindung betrifft eine Schaltungsanordnung für den Betrieb eines in seiner Drehrichtung umkehrbaren Gleichstrommotors, insbesondere für einen Verstellantrieb eines Kraftfahrzeuges, welche über eine gegen Falschpolung geschützte, vorzugsweise von einem Mikrocontroller gesteuerte Schaltvorrichtung an ein Gleichspannungsnetz anschließbar ist. Hierzu ist die Schaltvorrichtung (12) für den Gleichstrommotor (10) als Vollbrückenschaltung (H-Schaltung) ausgebildet mit unterschiedlichen Brückenhälften auf der positiven (High-Side) und der negativen Anschlussseite (Low-Side) des Gleichspannungsnetzes (14,16), wobei eine Brückenhälfte an einem Anschluss des Gleichspannungsnetzes (14,16) ohne Freilaufstrecken für den Motorstrom (I) aufgebaut ist, während die dem anderen Anschluss des Gleichspannungsnetzes (14,16) zugewandte Brückenhälfte Freilaufstrecken für den Motorstrom (I) aufweist.

## Beschreibung

### Stand der Technik

Die Erfindung betrifft eine Schaltungsanordnung für den Betrieb eines in seiner Drehrichtung umkehrbaren Gleichstrommotors, insbesondere für einen Verstellantrieb eines Kraftfahrzeuges. Hierzu ist aus der DE 100 44 388 A eine Schaltungsanordnung zum Ein- und Ausschalten eines an einem Gleichspannungsnetz betriebenen Gleichstrommotors mit großer Motorleistung für die Verwendung in Kraftfahrzeugen bekannt, welcher einen im Stromkreis des Gleichstrommotors angeordneten Halbleiterschalter mit einer zugeordneten Steuereinheit aufweist. Die nur für eine Drehrichtung ausgelegte Schaltungsanordnung besitzt eine Verpolschutzvorrichtung, welche insbesondere die elektronischen Bauelemente der Schaltungsanordnung bei Falschpolung der Gleichspannungsanschlüsse schützt. Derartige Falschpolungen sind im Kraftfahrzeug nicht selten, sie treten insbesondere auf durch Fehler beim Austausch der Kraftfahrzeugbatterie oder bei einem unsachgemäß durchgeführten Starthilfevorgang. Für die Verpolschutzvorrichtung sind in diesem Fall zusätzliche Bauelemente in Form eines weiteren Halbleiterschalters, eines Relaiskontaktes und einer Freilaufdiode für diesen erforderlich, welche die Schaltungsanordnung deutlich verteuern.

Der Erfindung liegt die Aufgabe zugrunde, die Mehrkosten für den Verpolschutz der Schaltungsanordnung zu vermeiden. Dies erreicht man durch die kennzeichnenden Merkmale des Anspruches 1, wobei durch zweckmäßige Auswahl und Anordnung der verwendeten Schaltelemente für den Motor zusätzliche Bauteile für den Verpolschutz entfallen können.

Als besonders vorteilhaft hat es sich erwiesen, wenn alle Schaltelemente der Brückenschaltung als Halbleiterschalter ausgeführt sind, wobei vorzugsweise die dem Pluspol des Gleichspannungsnetzes zugewandten Halbleiterschalter ohne Freilaufstrecken als Bipolartransistoren, insbesondere als IGBT-Schalter ausgebildet sind, welche bei einer Verpolung des Gleichspannungsanschlusses keinen Kurzschlussstrom führen können. Als Bauelemente für die Schaltvorrichtungen der dem Minuspol des Gleichspannungsnetzes zugewandten Brückenhälfte eignen sich insbesondere MOSFETs, welche auf Grund ihrer integrierten Inversdioden nach dem Abschalten des Stromes in der anderen Brückenhälfte das Abklingen des Motorstromes in der Freilaufphase ermöglichen und somit schädliche Spannungsspitzen unterdrücken.

Weitere Einzelheiten und vorteilhafte Ausgestaltungen der Erfindung ergeben sich aus der Beschreibung des Ausführungsbeispieles.

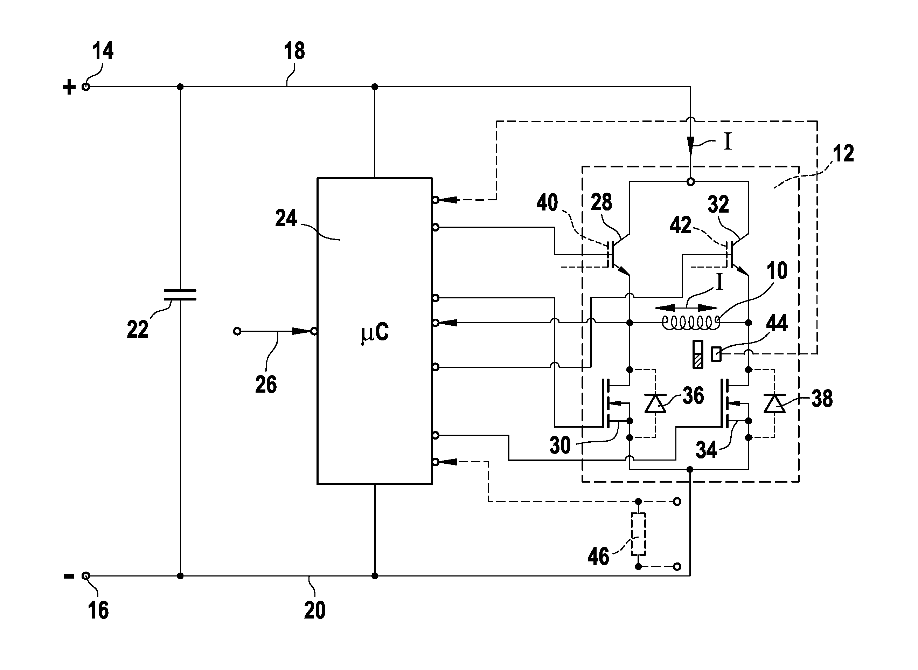

Die Abbildung zeigt eine Schaltungsanordnung für den Betrieb eines einsträngigen Gleichstrommotors an einem Gleichspannungsnetz.

In der Figur ist mit 10 die Wicklung eines einsträngigen, permanentmagnetisch erregten Gleichstrommotors bezeichnet, welche über eine als Vollbrückenschaltung (H-Schaltung) gestaltete Schaltvorrichtung 12 an den Pluspol 14 und den Minuspol 16 eines Gleichspannungsnetzes angeschlossen ist. Die Zuleitung 18 vom Pluspol 14 und die Minusleitung 20 vom Minuspol 16 des Gleichspannungszwischenkreises sind zur Verbesserung der elektromagnetischen Verträglichkeit durch einen Zwischenkreiskondensator 22 überbrückt. Als Steuereinheit für die Schaltvorrichtung 12 dient ein Mikrocontroller 24, welcher in schematischer Darstellung zur Spannungsversorgung an die Plusleitung 18 und an die Minusleitung 20 angeschlossen ist und in Form eines Eingangssignals 26 Sollwerte für den Betrieb des Gleichstrommotors 10 erhält.

Der Gleichstrommotor 10, welcher insbesondere als Antriebsmotor für Verstellantriebe im Kraftfahrzeug wie beispielsweise Fensterheber- oder Schiebedachantriebe dient, ist in seiner Drehrichtung umkehrbar, was durch einen Doppelpfeil an der Wicklung des Motors 10 angedeutet ist. Die Stromversorgung für den Gleichstrommotor 10 erfolgt dann in der einen Drehrichtung über einen bipolaren Transistor 28 und einen MOSFET 30, in der entgegengesetzten Drehrichtung über einen bipolaren Transistor 32 und einen MOSFET 34. Bei den MOSFETs 30 und 34 sind mit gestrichelten Linien integrierte Inversdioden 36 und 38 angedeutet. Anstelle der bipolaren Transistoren 28 und 32 können auch ebenfalls gestrichelt angedeutete IGBT- Schaltelemente 40 und 42 verwendet werden.

Zur Ansteuerung der verschiedenen Schaltelemente der Schaltvorrichtung 12 ist jeweils die Basis der bipolaren Transistoren 28 und 32 sowie jeweils die Gate-Elektrode der MOSFETs 30 und 34 mit jeweils einem Steuerausgang des Mikrocontrollers 24 verbunden. Bei der Verwendung von IGBT-Schaltelementen 40 und 42 anstelle der biopolaren Transistoren 28 und 32 erhält jeweils deren Gate-Elektrode das Steuersignal vom Mikrocontroller 24. Außerdem ist ein Ende der Wicklung des Gleichstrommotors 10 zur Erfassung der Spannung am Motor mit einem weiteren Eingang des Mikrocontrollers 24 verbunden.

Die dargestellte Schaltungsanordnung enthält in der Regel weiterhin einen Hallsensor 44 zur Erfassung der Umdrehung des Gleichstrommotors 10 und damit des Weges eines angeschlossenen Verstellantriebes, sowie einen Shunt 46 zur Überwachung der Größe des Motorstromes I. Diese Bauelemente sind in der Zeichnung gestrichelt dargestellt, ihre Signale werden ebenfalls jeweils einem Eingang des Mikrocontrollers 24 zugeführt. Eine Treiberstufe für die Schaltvorrichtung 12 ist Teil der Steuereinheit 24.

### Die Schaltungsanordnung arbeitet folgendermaßen:

Entsprechend dem Sollwert-Eingangssignal 26 steuert der Mikrocontroller 24 die für die vorgegebene Drehrichtung bestimmten Halbleiterschalter 28 und 34, beziehungsweise 32 und 30 in den leitfähigen Zustand. Der Motorstrom I fließt dann beispielsweise vom Pluspol 14 über die Plusleitung 18 sowie den bipolaren Transistor 28 und den MOSFET 34 über die Minusleitung 20 zum Minuspol 16 des Gleichspannungsnetzes. Falls die entgegengesetzte Drehrichtung für den Motor 10 vorgegeben ist fließt der Strom über den bipolaren Transistor 32, die Motorwicklung 10 und den MOSFET 30 im entgegengesetzten Sinn durch den Gleichstrommotor und dreht diesen in die entgegengesetzte Richtung.

Die Erfassung der Höhe des Motorstromes und damit die Detektierung einer Blockierung oder einer Schwergängigkeit des Motors kann beispielsweise erfolgen durch einen Shunt 46, welcher zwischen dem masseseitigen Anschluss der Schaltvorrichtung 12 und dem Minuspol 16 des Gleichspannungsnetzes in den Stromfluss eingeschaltet ist. Der Spannungsabfall am Shunt 46 liefert dem Mikrocontroller 24 ein Signal über die Höhe des Stromes I.

Der durch den Gleichstrommotor 10 erzielte Verstellweg einer nicht dargestellten Verstelleinrichtung kann beispielsweise über die Anzahl der Umdrehungen des Gleichstrommotors 10 erfasst werden, wie dies beim Ausführungsbeispiel gestrichelt durch einen Hall-Sensor dargestellt ist, dessen Signale ebenfalls dem Mikrocontroller 24 zugeleitet werden.

Kern der vorliegenden Erfindung ist die Realisierung eines Verpolschutzes für die Schaltungsanordnung ohne zusätzliche Bauelemente, wie sie beispielsweise bei dem eingangs geschilderten Stand der Technik benötigt werden. Bei Verstellantrieben mit Drehrichtungsumkehr werden die Schaltelemente der Schaltvorrichtung 12 in bekannter Weise häufig als MOSFETs ausgebildet, welche jedoch auf Grund ihres inneren Aufbaus integrierte Inversdioden aufweisen, wie sie auch bei den MOSFETs 30 und 34 der erfindungsgemäßen Schaltungsanordnung dargestellt sind. Bei einem Falschanschluss mit Verpolung der Anschlüsse 14, 16 des Gleichspannungsnetzes kann dann ein Kurzschlussstrom über die Inversdioden der MOSFETs fließen und nachgeschaltete Bauelemente zerstören. Aus diesem Grund muss eine derartige, ausschließlich mit MOSFETs aufgebaute Schaltvorrichtung 12 in einer Zuleitung des Gleichspannungsnetzes, vorzugsweise in der Plusleitung 18 eine Verpolungssperre in Form einer zusätzlichen Schaltvorrichtung aufweisen, welche durch den erfindungsgemäßen Aufbau der Schaltungsanordnung eingespart werden kann.

Die Schaltvorrichtung 12 ist auf der dem Pluspol 14 und auf der dem Minuspol 16 des Gleichspannungsnetzes zugewandten Schaltungsseite unterschiedlich gestaltet, derart, dass eine Schaltungsseite nur Schaltelemente ohne Freilaufstrecken aufweist. Dies ist zum Beispiel der Fall bei bipolaren Transistoren 28 und 32, wie sie beim Ausführungsbeispiel auf der High-Side der Schaltvorrichtung 12 verwendet sind. Anstelle der bipolaren Transistoren 28 und 30 können mit Vorteil auch IGBT-Schalter 40 und 42 eingesetzt werden. Die Abkürzung IGBT steht für Insulated-Gate-Bipolar-Transistors, welche grundsätzlich auf der Technologie der SIPMOS-Transistoren beruhen und wie bipolare Transistoren ebenfalls keine integrierten Inversdioden aufweisen. Die IGBT- Schalter besitzen einen speziell ausgebildeten pn-Übergang auf einem homogenen Substrat und stellt praktisch eine Kombination aus MOSFET und bipolarem Transistor dar. Ein solches Schaltelement verhält sich wie ein selbstsperrender MOSFET, welcher nahezu leistungslos gesteuert werden kann. Ausgangsseitig ist der IGBT einem bipolaren Leistungstransistor ähnlich und kann deshalb hohe Spannungen und Ströme schalten.

Zur Steuerung des Umschaltvorgangs des Gleichstrommotors 10 von einer Drehrichtung in die andere Drehrichtung ist ein Ende der Wicklung des Gleichstrommotors 10 mit einem weiteren Eingang des Mikrocontrollers 24 verbunden und liefert diesem ein Signal für die Höhe der Spannung an der Wicklung des Motors 10. Entsprechend dieser Spannung wird vom Mikrocontroller 24 beim Umschalten von einer Drehrichtung in die entgegengesetzte Drehrichtung eine kurze Totzeit beim Umsteuern zwischen den bipolaren Transistoren 28 und 32 eingehalten, während der die MOSFETs 30 oder 34 noch leitfähig geschaltet sind. Die in der Wicklung des Gleichstrommotors 10 gespeicherte Energie kann während dieser Totzeit als Freilaufstrom über einen der beiden MOSFETs 30, 34 und über die Inversdiode des zweiten MOSFET abgebaut werden. Aus diesem Grund sind Freilaufstrecken in der anderen Brückenhälfte bei den bipolaren Transistoren 28 und 32, beziehungsweise bei den IGBT- Schaltelementen 40 und 42 nicht erforderlich und auch die ansonsten erforderliche Verpolschutz-Schaltvorrichtung in einer Zuleitung der Schaltvorrichtung 12 kann entfallen. Diese Schaltungsmaßnahmen sind in gleichartiger Weise auch bei einer gepulsten Ansteuerung der Halbleiterschaltelemente der Brückenschaltung einsetzbar.

Mit der erfindungsgemäßen Schaltungsanordnung ist es also möglich, ohne weitere Bauelemente einen definierten Betriebszustand der Schaltungsanordnung bei Verpolung der Versorgungsspannung an den Polen 14 und 16 des Gleichspannungsnetzes zu erreichen ohne die Symmetrie der Schaltvorrichtung 12 beim Aufbau auf einer Platine aufzubrechen, da kein fünfter Schalter in Form eines weiteren Halbleiters auf der Platine benötigt wird. Außerdem können die Ansteuerungslogik für ein zusätzliches Bauelement sowie Maßnahmen zum Abbau der an einer weiteren Wärmequelle entstehenden Verlustleistung entfallen und der Platzbedarf beim Aufbau der Schaltvorrichtung optimiert werden.

## Patentansprüche

1. Schaltungsanordnung für den Betrieb eines in seiner Drehrichtung umkehrbaren Gleichstrommotors, insbesondere für einen Verstellantrieb eines Kraftfahrzeuges, welche über eine gegen Falschpolung geschützte, vorzugsweise von einem Mikrocontroller gesteuerte Schaltvorrichtung an ein Gleichspannungsnetz anschließbar ist, **dadurch gekennzeichnet, dass** die Schaltvorrichtung (12) für den Gleichstrommotor (10) als Vollbrückenschaltung (H-Schaltung) ausgebildet ist mit unterschiedlichen Brückenhälften (28,32,40,42;30,34) auf der positiven (High-Side) und der negativen Anschlussseite (Low-Side) des Gleichspannungsnetzes (14,16), wobei eine Brückenhälfte ohne Freilaufstrecken für den Motorstrom (I) aufgebaut ist, während die dem anderen Anschluss des Gleichspannungsnetzes (14,16) zugewandte Brückenhälfte Freilaufstrecken (36,38) für den Motorstrom (I) aufweist.

2. Schaltungsanordnung nach Anspruch 1, **dadurch gekennzeichnet, dass** die dem Pluspol (14) des Gleichspannungsnetzes (14,16) zugewandte Brückenhälfte mit Schaltelementen (28,32;40,42) ohne Freilaufstrecken aufgebaut ist, während die dem Minuspol (16) des Gleichspannungsnetzes (14,16) zugewandten Schaltelemente (30,34) der Brückenschaltung jeweils eine Freilaufstrecke (36,38) für den Motorstrom (I) aufweisen.

3. Schaltungsanordnung nach Anspruch 1 oder 2, **dadurch gekennzeichnet, dass** die Schaltelemente ohne Freilaufstrecken als Bipolartransistoren (28,32) ausgebildet sind.

4. Schaltungsanordnung nach einem der vorhergehenden Ansprüche, **dadurch gekennzeichnet, dass** die Schaltelemente ohne Freilaufstrecken als IGBT- Schalter (40,42; Insulated-Gate-Bipolar-Transistor) ausgebildet sind.

5. Schaltungsanordnung nach einem der vorhergehenden Ansprüche, **dadurch gekennzeichnet, dass** als Schaltelemente (30,34) mit Freilaufstrecken (36,38) MOSFETs dienen.
